# EUROPEAN PATENT SPECIFICATION

(11) **EP 1 556 151 B1**
(45) Date of publication and mention of the grant of the patent: **04.04.2007**
(21) Application number: 03758326.7
(22) Date of filing: 20.10.2003
(51) Int. Cl.: B01D 29/01, B01D 33/00, B07B 1/46, B07B 1/48

(54) **WOVEN WIRE CLOTH SCREEN**
SIEB AUS DRAHTGEWEBE
CRIBLE A TOILES METALLIQUES TISSEES

(30) Priority: 02.11.2002 GB 0225619
(43) Date of publication of application: 27.07.2005
(73) Proprietor: United Wire Ltd, Edinburgh EH5 1HT (GB)
(72) Inventor: ROBERTSON, Graham, Alexander, Edinburgh EH4 7EN (GB)
(74) Representative: Sharrock, Daniel John
(86) International application number: PCT/GB2003/004531
(87) International publication number: WO 2004/041406

(56) References cited:
- EP-A- 0 169 698
- WO-A-99/24144
- GB-A- 2 308 315
- GB-A- 2 322 590
- US-A- 4 696 751
- US-A- 5 221 008
- US-A- 5 927 511
- US-A- 5 958 236
- US-B1- 6 454 099

## Description

### Field of the invention

This invention concerns woven wire cloth screens for filtering liquids from a mixture of solids and liquids, particularly but not exclusively drilling muds. Typically such screens are located in a vibratory shaker to assist in separating the constituents of the mud and to cause the solids left on the wire cloth of the screen to migrate to one end thereof for discharge and collection.

### Background

Various filtering screen configurations are disclosed in US-A-5958236, US-A-6454099, US-A-5221008, EP-A-0169698 and GB-A-2308315.

GB-A-2322590 describes a filtering screen having two layers of woven wirecloth fitted thereover and bonded thereto. The lower wirecloth has a coarser mesh than the upper wirecloth and the tension in the wires forming the upper wirecloth is less than the tension in the wires forming the lower wirecloth.

Certain strata produce relatively large highly abrasive particles when drilled, and screens have been found to fail prematurely in use, when drilling through such material. Thus instead of a screen lasting for up to several days before abrasion ruptures the wire cloth, failure has occurred within a few hours.

It is an object of the present invention to provide an improved design of woven wire cloth screen, which overcomes this problem.

### Summary of the invention

According to the present invention, in a woven wire cloth screen in which at least one fine mesh cloth overlies a coarser mesh backing cloth, an additional coarser mesh cloth is secured over the fine mesh cloth whose mesh and wire size at least are selected so as in general to prevent relatively large abrasive particles from making contact with the fine mesh cloth, the tension in the additional coarser mesh cloth being greater than that in the fine mesh cloth(s).

Where there are three or more cloths, different tensions may exist in each of the cloths. However it is to be understood that the invention is not limited to arrangements in which each cloth has a different tension from the other(s) and the cloths (or some of them) may have the same tension if appropriate.

The tension of the said additional cloth can affect its performance, and the tension in the mesh of this additional cloth is selected so that it will perform its protective function and not adversely affect the vibration of the fine mesh cloth (or cloths) therebelow.

In a preferred embodiment, the tension in the additional coarser mesh cloth is approximately twice the tension in the fine mesh cloth(s).

Preferably, two fine mesh cloths overlie the backing cloth so that one fine mesh cloth is sandwiched between the upper fine mesh cloth and the backing cloth, and the mesh size of the cloth which is so sandwiched is very close to the mesh size of the said upper cloth, and in use assists in de-blinding the upper cloth due to relative vibrational movement between it and the lower fine mesh cloth, and the additional coarser mesh cloth overlies the upper fine mesh cloth.

The mesh size of the additional cloth must be selected with care since if the mesh openings are too large, correspondingly large sharp particles can reach and damage the upper cloth therebelow. Likewise if the openings in the additional cloth are too large the additional cloth may not allow steady migration of separated solids over the screen in use, resulting inter alia in local overloading and failure.

The additional cloth may to advantage have rectangular mesh openings such that for example the openings in the weave are twice as long in one direction as in the other. In general the larger dimensions of the openings in the weave should run parallel to the direction in which separated solids migrate over the surface of the screen in use.

Typically the cloths are stretched over and bonded to a rigid frame and in general such frames are rectangular (although other shaped frames can be used). A screen having a rectangular frame will be referred to as a rectangular screen and in general rectangular screens are normally operated so that the longer dimension of the screen is parallel to the direction in which separated solids migrate over the screen. Therefore as a general rule, where the screen includes a generally rectangular frame to which the cloths are secured, the said additional cloth is fitted to the screen frame so that the larger dimensions of the openings in the weave are parallel to the longer edges of the frame.

Where a screen frame is for example square, and the cloths have rectangular openings, the cloths are preferably fitted to the frame so that the larger dimensions of the mesh openings are parallel to one edge of the frame and the latter is mounted in a shaker so that the direction of solids migration over the screen in use is parallel to the said one edge of the frame.

### Examples of improved screens

In a preferred screen having a single fine mesh cloth the three cloths may be as follows:-

| | |
|---|---|
| Backing cloth: | 30# x 0.280mm diameter S/S wire |
| Fine mesh cloth: | 180# x 0.030mm diameter S/S wire |
| Additional top cloth: | 30# x 60# x 0.160mm diameter S/S wire. |

In another preferred screen having two fine mesh cloths, the four cloths may be as follows:-

| | |
|---|---|
| Backing cloth: | 30# x 0.280mm diameter S/S wire |
| Upper fine mesh: | 180# x 0.030mm diameter S/S wire |
| Lower fine mesh: | 160# x 0.036mm diameter S/S wire |
| Additional top cloth: | 30# x 60# x 0.160mm diameter S/S wire |

Tensions in the wire mesh cloths is normally achieved using pneumatically powered rams acting on clamps which grip the edges of the cloths. If (as is usual) all the rams are of the same size, the tensions imparted to the cloths will be proportional to the air pressure applied to the rams acting on the different cloths.

In the case of a three-cloth screen the pressures applied to the three sets of rams may be in the following ratios:-

| Backing mesh | Fine mesh | Additional top mesh |
|---|---|---|
| 2.0 | 1.0 | 1.9 |

In the case of a four cloth screen the pressures applied to the different sets of rams may be in the following ratios:

| Backing mesh | Lower fine mesh | Upper fine mesh | Additional top mesh |
|---|---|---|---|
| 2.0 | 1.0 | 1.0 | 1.9 |

Where the two fine mesh cloths are to have the same tension (as in this last example) they can be tensioned together using the same set of clamps and rams.

If however the tension in one fine mesh cloth is to be different from that in the other fine mesh cloth, then a further set of rams and clamps will be needed to allow each cloth to be tensioned independently of the other.

A screen constructed in accordance with the invention has proved more durable than screens not having the additional cloth when sifting drilling mud recovered from a sea-bed drilling operation as the drill is progressing through sub-sea strata composed of Utsira sand.

The invention also lies in a method of making a woven wire cloth screen which will withstand highly abrasive large particles such as obtained when drilling through Utsira sand, in which a support frame is located in a jig, a coarse backing cloth is stretched over the frame and secured between clamping jaws along all four edges and then tensioned by moving all the clamps relatively outwardly by pneumatic rams, similarly stretching a fine mesh wirecloth over the first cloth and similarly tensioning it by means of a second set of clamps and rams, similarly stretching an additional coarse mesh cloth over the fine mesh cloth and tensioning it by means of a third set of clamps and rams, thereafter securing the cloths to the support frame under pressure, releasing the pressure, opening the clamping jaws, trimming surplus wirecloth back to the frame and removing the finished screen from the jig.

If two fine mesh cloths are required the second fine mesh cloth may be laid over the first fine mesh cloth before the top coarse cloth is applied. Both fine mesh cloths can be clamped with the same set of jaws and rams, or a further set of jaws and rams may be provided for tensioning the second fine mesh cloth. Where only one set of jaws is provided for the two fine mesh cloths the two cloths will have the same tension, but where a separate set of jaws and rams are provided the tension in the second fine mesh cloth may be different from that in the first fine mesh cloth.

If slippage is noted where two fine mesh cloths are clamped in the same set of jaws, the method may include the step of inserting a strip of coarser mesh cloth between the two layers locally between the clamping jaws, to assist in gripping the two fine mesh layers between the jaws.

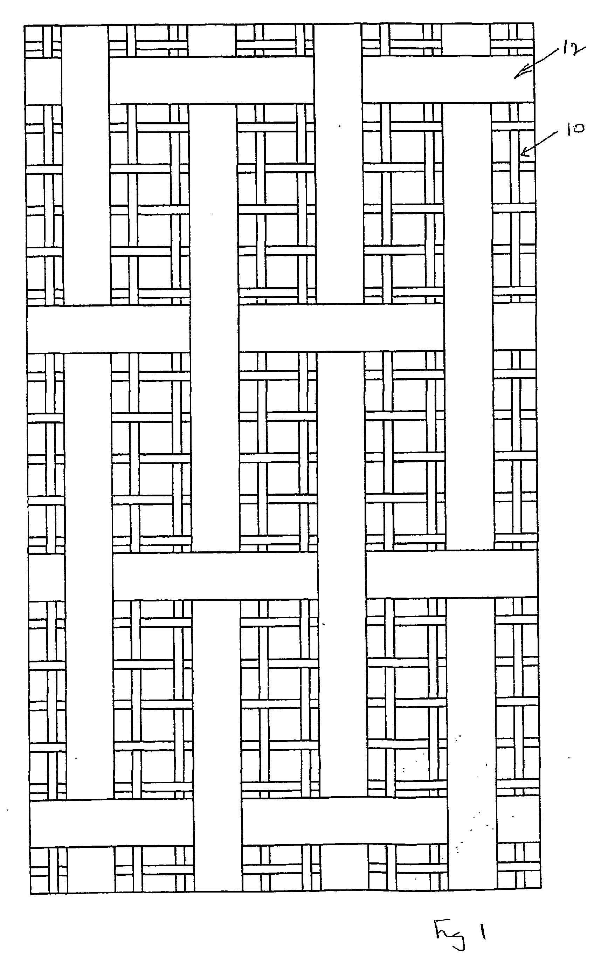

The invention will now be described by way of example with reference to the accompanying drawing in which the single Figure, Fig 1, illustrates to an enlarged scale in plan view from above, a small part of a fine mesh cloth 10 overlaid by a coarse mesh cloth 12. The mesh size of 12 is such as to prevent, in general, relatively large abrasive particles from making contact with the fine mesh cloth 10. In the drawing, a backing cloth (which would be below the fine mesh cloth) has been omitted, for clarity.

All of the cloths are secured in position in manner known per se to a relatively rigid frame (not shown) by bonding to a thermoplastic material from which the screen is constructed or which covers a metal or other inner core, so as to form a screen for use in a sieving machine such as a shale shaker used to separate solids from drilling mud retrieved from down-hole during oil or gas well drilling operations.

An example of such a screen and frame and its manner of manufacture is illustrated and described in GB Patent Specification No. 2,322,590 and copending GB Patent Application No. 0226338.2 (published as GB-A-2388558).

## Claims

1. A woven wire cloth screen in which at least one fine mesh cloth overlies a coarser mesh backing cloth, and an additional coarser mesh cloth is secured over the fine mesh cloth whose mesh and wire size at least are selected so as in general to prevent relatively large abrasive particles from making contact with the fine mesh cloth, the tension in the additional coarser mesh cloth being greater than that in the fine mesh cloth(s).

2. A screen as claimed in claim 1 wherein a different tension exists in the wires making up each of the cloths.

3. A screen as claimed in claim 1 wherein the tension in the additional coarser mesh cloth is approximately twice the tension in the fine mesh cloth(s).

4. A screen as claimed in any one of claims 1 to 3 wherein two fine mesh cloths overlie the backing cloth so that one fine mesh cloth is sandwiched between the upper fine mesh cloth and the backing cloth, and the mesh size of the cloth which is so sandwiched is very close to the mesh size of the said upper fine mesh cloth, and in use assists in de-blinding the upper cloth due to relative vibrational movement between it and the lower fine mesh cloth, and the additional coarser mesh cloth overlies the upper fine mesh cloth.

5. A screen as claimed in any one of claims 1 to 4 wherein the additional cloth has rectangular mesh openings.

6. A screen as claimed in claim 5 wherein the rectangular openings in the weave are twice as long in one direction as in the other.

7. A screen as claimed in claim 5 or claim 6 wherein the larger dimensions of the openings in the weave run parallel to the direction in which separated solids migrate over the surface of the screen in use.

8. A screen as claimed in any one of claims 1 to 7 wherein the cloths are stretched over and bonded to a rigid frame.

9. A screen as claimed in claim 8 wherein the rigid frame is rectangular.

10. A screen as claimed in claim 9 which in use is arranged so that the longer dimension of the screen is parallel to the direction in which separated solids migrate over the screen.

11. A screen as claimed in any one of claims 7 to 10 wherein the additional cloth is fitted to the frame so that the larger dimensions of the openings in the weave are parallel to the longer edges of the frame.

12. A screen as claimed in claim 1 having a single fine mesh cloth sandwiched between backing cloth and overlying additional coarser mesh cloth in which the backing cloth is 30 mesh x 0.280mm diameter stainless steel wire, the fine mesh cloth is 180 mesh x 0.030mm diameter stainless steel wire and the additional top cloth is 30 mesh x 60 mesh x 0.160mm diameter stainless steel wire.

13. A screen as claimed in claim 4 wherein the backing cloth is 30 mesh x 0.280mm diameter stainless steel wire, the upper fine mesh is 180 mesh x 0.030mm diameter stainless steel wire, the lower fine mesh is 160 mesh x 0.036mm diameter stainless steel wire, and the additional top cloth is 30 mesh x 60 mesh x 0.160mm diameter stainless steel wire.

14. A screen as claimed in any of claims 1 to 13 when fitted to and used to sift drilling mud recovered from a sea-bed drilling operation progressing through sub-sea strata composed of Utsira sand.

15. A method of making a screen as claimed in any preceding claim wherein the cloths are in turn laid over a rigid frame to which they are to be bonded and the tension in the wire mesh cloths is achieved using pneumatically powered rams acting on clamps which grip the edges of the cloths, wherein all the rams are of the same size and different tensions are imparted to the cloths by supplying air at differing pressures to the rams acting on the different cloths.

16. A method as claimed in claim 15 when employed to make a screen as claimed in claim 1 in which the pressures applied to the three sets of rams are in the following ratios, backing mesh rams 2.0, fine mesh rams 1.0, and additional top mesh rams 1.9.

17. A method as claimed in claim 15 when employed to make a screen as claimed in claim 4 in which the pressures applied to the rams are in the following ratios, backing mesh rams 2.0, lower fine mesh rams 1.0, upper fine mesh rams 1.0, and additional top mesh rams 1.9.

18. A method of making a woven wire cloth screen in which a support frame is located in a jig, a coarse mesh backing cloth is stretched over the frame and secured between clamping jaws along all four edges and then tensioned by moving all the clamps relatively outwardly by pneumatic rams, similarly stretching a fine mesh wirecloth over the backing cloth and similarly tensioning it by means of a second set of clamps and rams, similarly stretching an additional coarse mesh cloth over the fine mesh cloth and tensioning it by means of a third set of clamps and rams such that the tension in the additional coarse mesh cloth is greater than that in the fine mesh wirecloth, thereafter securing the cloths to the support frame under pressure, releasing the pressure, opening the clamping jaws, trimming surplus wirecloth back to the frame and removing the finished screen from the jig.

19. A method as claimed in claim 18 wherein a second fine mesh cloth is laid over the first fine mesh cloth before the top coarse cloth is applied.

20. A method as claimed in claim 17 or claim 19 wherein the two fine mesh cloths are clamped using the same set of clamps and rams.

## Patentansprüche

1. Sieb aus Drahtgewebe, in dem wenigstens ein feinmaschiges Gewebe über einem gröbermaschigen Trägergewebe liegt und ein zusätzliches gröbermaschiges Gewebe über dem feinmaschigen Gewebe befestigt ist, dessen Maschen- und Drahtgröße wenigstens so gewählt sind, dass im Allgemeinen verhindert wird, dass relativ große Scheuerpartikel mit dem feinmaschigen Gewebe in Kontakt kommen, wobei die Spannung in dem zusätzlichen gröbermaschigen Gewebe größer als die im feinmaschigen Gewebe (in feinmaschigen Geweben) ist.

2. Sieb nach Anspruch 1, wobei eine unterschiedliche Spannung in den Drähten, die jedes der Gewebe bilden, vorliegt.

3. Sieb nach Anspruch 1, wobei die Spannung in dem zusätzlichen gröbermaschigen Gewebe annähernd das Zweifache der Spannung in dem feinmaschigen Gewebe (den feinmaschigen Geweben) ist.

4. Sieb nach einem der Ansprüche 1 bis 3, wobei zwei feinmaschige Gewebe über dem Trägergewebe liegen, so dass ein feinmaschiges Gewebe zwischen dem oberen feinmaschigen Gewebe und dem Trägergewebe liegt und die Maschenweite des Gewebes, das so sandwichartig zwischengelegt ist, der Maschenweite des genannten oberen feinmaschigen Gewebes sehr nahe kommt, und bei Verwendung eine Freilegung des oberen Gewebes infolge einer relativen Vibrationsbewegung zwischen ihm und dem unteren feinmaschigen Gewebe unterstützt, und das zusätzliche gröbermaschige Gewebe über dem oberen feinmaschigen Gewebe liegt.

5. Sieb nach einem der Ansprüche 1 bis 4, wobei das zusätzliche Gewebe rechteckige Maschenöffnungen hat.

6. Sieb nach Anspruch 6, wobei die rechteckigen Maschenöffnungen im Webmuster in einer Richtung doppelt so lange sind wie in der anderen.

7. Sieb nach Anspruch 5 oder Anspruch 6, wobei die längeren Abmessungen der Öffnungen in dem Webmuster parallel zu der Richtung laufen, in der bei Verwendung abgetrennte Feststoffe über die Oberfläche des Siebs wandern.

8. Sieb nach einem der Ansprüche 1 bis 7, wobei die Gewebe über einen starren Rahmen gedehnt sind und an diesen gebunden sind.

9. Sieb nach Anspruch 8, wobei der starre Rahmen rechteckig ist.

10. Sieb nach Anspruch 9, das bei Verwendung so angeordnet wird, dass die längere Abmessung des Siebs parallel zu der Richtung ist, in der die abgetrennten Feststoffe über das Sieb wandern.

11. Sieb nach einem der Ansprüche 7 bis 10, wobei das zusätzliche Gewebe so an den Rahmen angepasst ist, dass die längeren Abmessungen der Öffnungen im Webmuster parallel zu den längeren Rändern des Rahmens sind.

12. Sieb nach Anspruch 1, das ein einzelnes feinmaschiges Gewebe sandwichartig zwischen dem Trägergewebe und einem darüber liegenden zusätzlichen gröbermaschigen Gewebe hat, wobei das Trägergewebe 30 mesh x 0,280 mm Durchmesser-Edelstahldraht (stainless steel wire) ist, das feinmaschigere Gewebe 180 mesh x 0,030 mm Durchmesser-Edelstahldraht ist, und das zusätzliche Deckgewebe 30 mesh x 60 mesh x 0,160 mm Durchmesser-Edelstahldraht ist.

13. Sieb nach Anspruch 4, wobei das Trägergewebe 30 mesh x 0,280 mm Durchmesser-Edelstahldraht ist, das obere feinmaschige Gewebe 180 mesh x 0,030 mm Durchmesser-Edelstahldraht ist, das untere feinmaschige Gewebe 160 mesh x 0,036 mm Durchmesser-Edelstahldraht ist, und das zusätzliche Deckgewebe 30 mesh x 60 mesh x 0,160 mm Durchmesser-Edelstahldraht ist.

14. Sieb nach einem der Ansprüche 1 bis 13, wenn es angepasst ist und verwendet wird, um Bohrschlamm zu sieben, der aus einem Meeresbett-Bohrvorgang gewonnen wird, der durch die Unterwasserflöze (strata) vorgetrieben wird, die aus Utsira-Sand bestehen.

15. Verfahren zur Herstellung eines Siebs, wie es in einem vorangehenden Anspruch beansprucht wird, wobei die Gewebe der Reihe nach über einen starren Rahmen gelegt werden, an den sie gebunden werden, und die Spannung in den Drahtmaschengeweben erreicht wird, indem pneumatisch getriebene Kolben auf Klemmen wirken, die die Ränder der Gewebe greifen, wobei alle Kolben die gleiche Größe haben, und unterschiedliche Spannung auf die Gewebe übertragen werden, indem Luft mit unterschiedlichen Drücken zu den Kolben geführt wird, die auf die verschiedenen Gewebe wirken.

16. Verfahren nach Anspruch 15, wenn es zur Herstellung eines Siebs, wie es in Anspruch 1 beansprucht wird, verwendet wird, indem die Drücke, die auf die drei Sätze von Kolben angewendet werden, in den folgenden Verhältnissen sind: Trägermaschen-Kolben 2,0, feinmaschiger Gewebe-Kolben 1,0, und zusätzlicher Deckgewebe-Kolben 1,9.

17. Verfahren nach Anspruch 15, wenn es zur Herstellung eines Siebs, wie es in Anspruch 4 beansprucht wird, verwendet wird, wobei die Drücke, die auf die Kolben angewendet werden, in den folgenden Verhältnissen sind: Trägergewebe-Kolben: 2,0, unterer feinmaschiger Gewebe-Kolben 1,0, oberer feinmaschiger Gewebe-Kolben 1,0, und zusätzlicher Deckgewebe-Kolben 1,9.

18. Verfahren zur Herstellung eines Siebs aus Drahtgewebe, in dem ein Stützrahmen in einer Aufspannvorrichtung lokalisiert ist, ein grobmaschiges Trägergewebe über den Rahmen gedehnt wird und zwischen Spannbacken entlang aller vier Ränder gesichert wird und dann durch Bewegen aller Klemmen durch pneumatische Kolben relativ nach außen, in ähnlicher Weise Dehnen eines feinmaschigen Drahtgewebes über das Trägergewebe und gleichzeitig Spannen desselben mit Hilfe eines zweiten Satzes an Klemmen und Kolben, in ähnlicher Weise Dehnen eines zusätzlichen grobmaschigen Gewebes über das feinmaschige Gewebe und Spannen desselben mit Hilfe eines dritten Satzes an Klemmen und Kolben, so dass die Spannung in dem zusätzlichen grobmaschigen Gewebe größer ist als die in dem feinmaschigen Drahtgewebe, danach Sichern der Gewebe an dem Stützrahmen unter Druck, Entspannen des Drucks, Öffnen der Spannbacken, Trennen von überflüssigem Drahtgewebe zurück zum Rahmen und Entfernen des fertigen Siebs von der Aufspannvorrichtung.

19. Verfahren nach Anspruch 18, wobei ein zweites feinmaschiges Gewebe über das erste feinmaschige Gewebe gelegt wird, bevor das grobe Deckgewebe aufgelegt wird.

20. Verfahren nach Anspruch 17 oder 19, wobei die zwei feinmaschigen Gewebe unter Verwendung des Satzes von Klemmen und Kolben geklemmt werden.

## Revendications

1. Crible en toile métallique tissée dans lequel au moins une toile à maille fine recouvre une toile de support à maille plus grossière et une toile à maille plus grossière supplémentaire est fixée sur la toile à maille fine, dans lequel la maille et la dimension de fil sont choisies au moins afin d'empêcher de façon générale que de grandes particules relativement abrasives viennent en contact avec la toile à maille fine, la tension dans la toile à maille plus grossière supplémentaire étant supérieure à celle dans la/les toile(s) à maille fine.

2. Crible selon la revendication 1, dans lequel une tension différente existe dans les fils constituant chacune des toiles.

3. Crible selon la revendication 1, dans lequel la tension dans la toile à maille plus grossière supplémentaire est approximativement le double de la tension dans la/les toile(s) à maille fine.

4. Crible selon l'une quelconque des revendications 1 à 3, dans lequel deux toiles à maille fine recouvrent la toile de support de sorte qu'une toile à maille fine est intercalée entre la toile à maille fine supérieure et la toile de support et la dimension de maille de la toile qui est ainsi intercalée est très proche de la dimension de maille de ladite toile à maille fine supérieure et en utilisation aide au décolmatage de la toile supérieure en raison du mouvement de vibration relatif entre elle et la toile à maille fine inférieure et la toile à maille plus grossière supplémentaire recouvre la toile à maille fine supérieure.

5. Crible selon l'une quelconque des revendications 1 à 4, dans lequel la toile supplémentaire présente des ouvertures de maille rectangulaires.

6. Crible selon la revendication 5, dans lequel les ouvertures rectangulaires dans le tissage sont deux fois aussi grandes dans une direction que dans l'autre.

7. Crible selon la revendication 5 ou 6, dans lequel les plus grandes dimensions des ouvertures dans le tissage s'étendent parallèlement à la direction dans laquelle les solides séparés migrent sur la surface du crible en utilisation.

8. Crible selon l'une quelconque des revendications 1 à 7, dans lequel les toiles sont étirées et reliées sur un châssis rigide.

9. Crible selon la revendication 8, dans lequel le châssis rigide est rectangulaire.

10. Crible selon la revendication 9, qui en utilisation est agencé afin que la dimension la plus longue du crible soit parallèle à la direction dans laquelle les solides séparés migrent sur le crible.

11. Crible selon l'une quelconque des revendications 7 à 10, dans lequel la toile supplémentaire est adaptée au châssis de sorte que les dimensions les plus grandes des ouvertures dans le tissage sont parallèles aux bords plus longs du châssis.

12. Crible selon la revendication 1, ayant une seule toile à maille fine intercalée entre la toile de support et la toile à maille plus grossière supplémentaire la recouvrant, dans lequel la toile de support est un fil en acier inoxydable de 30 mesh x 0,280 mm de diamètre, la toile à maille fine est un fil en acier inoxydable de 180 mesh x 0,030 mm de diamètre et la toile supérieure supplémentaire est un fil en acier inoxydable de 30 mesh x 60 mesh x 0,160 mm de diamètre.

13. Crible selon la revendication 4, dans lequel la toile de support est un fil en acier inoxydable de 30 mesh x 0,280 mm de diamètre, la maille fine supérieure est un fil en acier inoxydable de 180 mesh x 0,030 mm de diamètre, la maille fine inférieure est un fil en acier inoxydable de 160 mesh x 0,036 mm de diamètre et la toile supérieure supplémentaire est un fil en acier inoxydable de 30 mesh x 60 mesh x 0,160 mm de diamètre.

14. Crible selon l'une quelconque des revendications 1 à 13, lorsqu'il est adapté et utilisé pour cribler la boue de forage récupérée à partir d'une opération de forage en mer progressant au travers de strates sous la mer constituées de sable d'Utsira.

15. Procédé d'obtention d'un crible selon l'une quelconque des revendications précédentes, dans lequel les toiles sont déposées tour à tour sur un châssis rigide auquel elles sont reliées et la tension dans les toiles à maille en fil métallique est obtenue en utilisant des vérins à actionnement pneumatique agissant sur des dispositifs de serrage qui saisissent les bords des toiles, dans lequel tous les vérins sont de la même dimension et des tensions différentes sont conférées aux toiles en fournissant de l'air à des pressions différentes aux vérins agissant sur les différentes toiles.

16. Procédé selon la revendication 15, lorsqu'il est mis en oeuvre pour obtenir un crible selon la revendication 1, dans lequel les pressions appliquées aux trois groupes de vérins sont dans les rapports suivants, vérins de maille de support 2,0, vérins de maille fine 1,0 et vérins de maille supérieure supplémentaire 1,9.

17. Procédé selon la revendication 15, lorsqu'il est mis en oeuvre pour obtenir un crible selon la revendication 4, dans lequel les pressions appliquées aux vérins sont dans les rapports suivants, vérins de maille de support 2,0, vérins de maille fine inférieure 1,0, vérins de maille fine supérieure 1,0 et vérins de maille supérieure supplémentaire 1,9.

18. Procédé d'obtention d'un crible en toile métallique tissée dans lequel un châssis de support est situé dans un gabarit, une toile de support à maille grossière est étirée sur le châssis et fixée entre des mâchoires de serrage le long de tous les quatre bords et est ensuite mise sous tension en déplaçant tous les dispositifs de serrage relativement vers l'extérieur par des vérins pneumatiques en étirant de façon similaire une toile métallique à maille fine sur la toile de support et en la mettant sous tension de façon similaire au moyen d'un deuxième groupe de dispositifs de serrage et de vérins en étirant de façon similaire une toile à maille grossière supplémentaire sur la toile à maille fine et en la mettant sous tension au moyen d'un troisième groupe de dispositifs de serrage et de vérins de sorte que la tension dans la toile à maille grossière supplémentaire soit supérieure à celle dans la toile métallique à maille fine en fixant ensuite les toiles au châssis de support sous pression, en libérant la pression, en ouvrant les mâchoires de serrage, en ébarbant la toile métallique en surplus sur le châssis et en éliminant le crible fini du gabarit.

19. Procédé selon la revendication 18, dans lequel une deuxième toile à maille fine est déposée sur la première toile à maille fine avant l'application de la toile grossière supérieure.

20. Procédé selon la revendication 17 ou 19, dans lequel les deux toiles à maille fine sont serrées en utilisant le même groupe de dispositifs de serrage et de vérins.
